# EUROPEAN PATENT SPECIFICATION

(11) **EP 3 015 620 B1**
(45) Date of publication and mention of the grant of the patent: **26.08.2020**
(21) Application number: 14003686.4
(22) Date of filing: 31.10.2014
(51) Int. Cl.: E04F 13/08, B32B 9/00, B32B 27/30, E04F 13/14

(54) **Panel for the enclosure and external thermal insulation of façades and roofs, and the installation procedure**
Paneel für Gehäuse und äußere Wärmedämmung von Fassaden und Dächern und Installationsverfahren
Panneau destiné à l'enceinte et l'isolation thermique externe de façades et de toits et procédure d'installation

(43) Date of publication of application: 04.05.2016
(73) Proprietor: Ferrero Gonzalez, Josen Hermogenes, 24400 Ponferrada (ES); Nunez Carballo, Alfredo, 24400 Ponferrada (ES)
(72) Inventor: Ferrero Gonzalez, Josen Hermogenes, 24400 Ponferrada (ES); Nunez Carballo, Alfredo, 24400 Ponferrada (ES)
(74) Representative: Lahidalga de Careaga, Jose Luis

(56) References cited:
- EP-A1- 1 338 719
- EP-A1- 2 172 330
- DE-A1-102007 048 802
- DE-U1-202011 102 156
- FR-A1- 2 544 766
- US-A1- 2014 053 496

## Description

### OBJECT OF THE INVENTION

The invention proposed in this patent is for a PANEL FOR THE ENCLOSURE AND EXTERNAL THERMAL INSULATION OF FAÇADES AND ROOFS AND THE INSTALLATION PROCEDURE, based on application of a compound modular panel secured on the building's original façade or on the new structural support of the façade, using specific profiles which may be the external façade, second leaf or an external decorative element, depending on their finish.

### FIELD OF THE INVENTION

The field of the invention is that of manufacturers of compound panels and installers of façades and roofs, including metal profile manufacturers.

### BACKGROUND OF THE INVENTION

There are some antecedents referring to similar devices.

EP 2 172 330 A1 discloses a compound modular panel for the enclosure and external thermal insulation of façades and roofs of a building, comprising the following elements from the inside to the outside:
- a layer of vapour-proof material;
- a core of an insulating material wall formed by high-density extruded polystyrene;
- an outside wall of the panel made of a natural stone strip joined to said core by an adhesive.

Devices for the dressing of building façades are known, consisting essentially of a structure of support elements, normally horizontal and/or vertical beams which are secured on the building façade and carry a number of finishing panels or elements such as glazing, stone cladding, insulating panels, etc.

There are specifically devices of this type which allow initial finishing elements to be attached, and for second finishing elements to be fixed in place.

Said first finishing elements consist of layers or intermediate panels of thermal insulation, acoustic insulation, waterproofing, etc.

The second finishing elements form the shell or outer wall of the building, and may consist of stone plate, glazing, etc.

One such device is described in document EP 1 338 719 A1 disclosing a system for attaching panels in wall construction.

Said system comprises a support structure formed by a multiplicity of vertical beams attached to the outside of a building, and a multiplicity of horizontal beams to support the panels, assembled with a vertical separation on the external face of said vertical beams.

Each stone panel is assembled and carried between a pair of upper and lower horizontal beams. The vertical beams have lateral tabs to carry insulating panels.

With this device, the insulating panels must be bolted on to the lateral tabs of the vertical beams, to be able to bear their weight as well as wind pressure, so that their assembly is slower.

Likewise, the insulating panels are not carried on any horizontal element, so that all the weight of said panels is borne by the bolts, reducing the system's solidity.

On the other hand, because the horizontal beams are assembled on the outer face of the vertical beams, the general thickness of the device is considerable and the support profiles are often visible.

US 2014/053496 Shin Seon Ho, discloses a lightweight stone insulating panel and construction method for insulating a building exterior using the same.

Although this art is closer to the present invention, there are substantial differences between them.

First of all the present invention is able to obtain different finishes and therefore it may be the external façade, second leaf or an external decorative element of a building.

The panel disclosed does not have a layer of fine ceramic insulation (7) consisting of a liquid ceramic compound based on spherical micrograms of four types of special ceramics, in the form of an elastic finish acrylic emulsion.

The insulation board is not formed by high-density extruded polystyrene, approximately 100 mm thick.

There is a plate made solely of stone, whereas making it only suitable for exteriors.

At present, designs for the thermal insulation of buildings from the outside take mainly one of two forms.

In the first case, insulation is applied and, over that, successive layers of mortar and binders are added until the finish is flush. These layers constitute the final finish onto which mortar or paint solutions are applied. In such cases, surface finishes are very limited, and do not allow for ceramic or stone cladding.

In the second case, the façades designed are assembled on a substructure which separates the façade finish, using insulation in the chamber as a means to enhance the building shell.

This system, known as ventilated façade, will prevent fire from propagating in the interior, thanks to its mandatory firebreaks.

Final finish may be in aluminium or mixed composite panels, rigid material elements such as stone, fibrocement panels, etc.

The versatility of this system is obtained at high cost because of the complex substructure of profiles and moorings required, and the heterogeneous insulation assembly.

The system proposed here adapts to the construction, is robust, its main benefit being the high yield in insulation for ventilated façades, enclosures and roofs.

The solution proposed resolves the problems of traditional finishes such as grouting, which habitually crack.

Because the panel is manufactured in the plant under control and supervisory measures, the finish is homogeneous.

The possibility of producing plates of dimensions up to 1,200 mm wide and 2,400 mm high finished in stone and of reduced weight makes the system revolutionary thanks to the ease of handling and the absence of risk of danger and strain from manipulating heavy products.

At the same time, the panels in the proposed system, with their high capacity to support impact, can be used in any situation, whether indoors where facings may suffer impacts, or outdoors, with the capacity to bear the normal actions affecting a public space.

The behaviour of the solution offered includes the building's complete conservation, with no further resource than this panel to obtain the energy saving target.

The design in the enclosed interior as a whole does not allow fire to be propagated, as the materials used for the outside face of the system are characterised by their good performance against the action of fire, their classification and protection standardised in regulations.

All materials used to manufacture this product are tested, resulting in a system which respects the environment greatly, implies no risk to the health of the end user, nor for those handling it, as it also has the property of solar photocatalysis, avoiding the formation of bacteria and mould.

The inventor is aware of no predecessor that incorporates the elements in this invention, nor the benefits resulting from said elements.

### DESCRIPTION OF THE INVENTION

The invention proposed refers to a PANEL FOR THE ENCLOSURE AND EXTERNAL THERMAL INSULATION OF FAÇADES AND ROOFS, AND THE INSTALLATION PROCEDURE, based on the application of a compound modular panel secured to the original façade of the building or to a surface support based on a fireproofed steel, masonry or concrete frame, without the need to construct any enclosure prior to the work on the new façade, using specific profiles and which may, depending on their finish, be the external façade, a second leaf or a decorative external element, comprising essentially the following elements:
The base panel comprises a layer of thin ceramic insulation made of a liquid ceramic compound based on spherical micrograms of four types of special ceramics, in the form of an acrylic emulsion of minimal pollutant level and an elastic finish which, on drying, solidifies and is highly resistant to heat and fire.

The panel core consists of a wall of insulating material, consisting of high-density extruded polystyrene, also known as "XPS", approximately 100 mm thick.

The outer wall of the panel consists of fine strips of natural stone or slate joined to the panel core using a twin-component viscous adhesive based on epoxy resin with filler and polyamine content, ideal for these purposes, and fire-resistant.

The components for fixing the panel to the new support or the old façade of the building are formed from a mooring strap in the form of an L-shaped metal section fixed on the attachment support using studs or screws.

The panel is supported on the horizontal section of the mooring strap by the fixation elements, and the base profile (4) is fixed, comprising a cross-shaped straight section, its straight section longer than the panel base so that the free horizontal part can be secured to said horizontal section, and also with a section of the same characteristics but in the form of a perpendicular cross in the middle and so emerging at both top and bottom.

In the case of the lower starting panel, the lower part of the perpendicular section of the profile would be absent.

The assembly procedure is relatively simple:
The mooring strap is attached to the securing support or the façade to be renovated using the fixation elements.

The base profile is subsequently secured to the horizontal part of the mooring strap with the fixation elements.

The panel is secured on this base profile, with its perpendicular part inside a longitudinal groove in the core of the panel it carries.

The assembly and construction system significantly reduces manpower time, allowing for high-performance construction.

### DESCRIPTION OF THE DRAWINGS

For a better understanding of the invention, a sheet of plans is attached, showing the following:

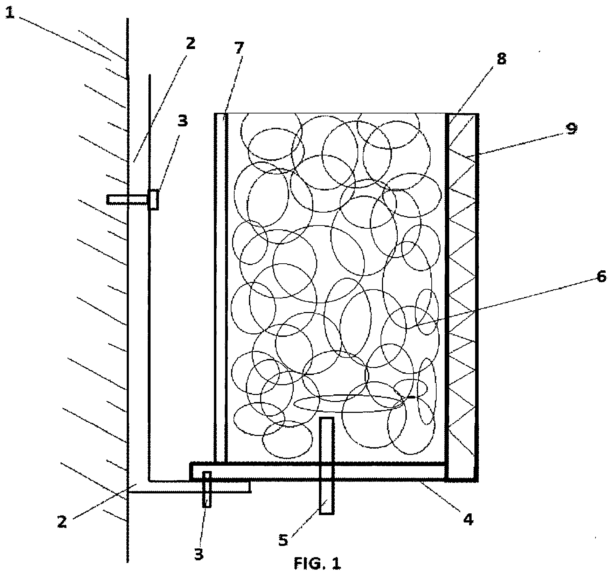

**FIGURE 1****.-** A side view of the panel once installed, and of its component elements.

In said figure the reference numerals refer to the following features:
(1).- fixation wall or structural support,
(2).- mooring strap,
(3).- fixation elements,
(4).- base profile,
(5).- mooring profile,
(6).- panel core,
(7).- ceramic insulation layer,
(8).- viscous adhesive,
(9).- external wall.

### A PREFERENTIAL EMBODIMENT OF THE INVENTION

The invention proposed in this patent is for a PANEL FOR THE ENCLOSURE AND EXTERNAL THERMAL INSULATION OF FAÇADES AND ROOFS, AND THE INSTALLATION PROCEDURE, based on the application of a compound modular panel secured to the building façade or to the new support structure, using specific profiles and which may, depending on their finish, be the external façade, a second leaf or a decorative external element, comprising essentially the following elements:
The base panel comprises a layer of thin ceramic (7) consisting of a liquid ceramic compound based on spherical micrograms of four types of special ceramics, in the form of an acrylic emulsion of minimal pollutant level and an elastic finish, and highly resistant to heat and fire.

The panel core (6) consists of a module of insulating material, consisting of high-density extruded polystyrene, also known as "XPS", approximately 100 mm thick.

The outer wall of the panel (9) consists of a fine laminated strip of natural stone or slate joined to the panel core (6) using a twin-component viscous adhesive (7) based on epoxy resin with filler and polyamine content.

The components for fixing to the old façade or the new structural support are formed from a mooring strap (2) comprising an L-shaped metal section secured on the attachment support (1) using studs or screws as fixation elements (2).

The panel is supported on the horizontal section of the mooring strap (2) by the fixation elements (3), and the base profile (4) is fixed, comprising a straight section which is longer than the panel base so that the free part can be secured to said horizontal section, and also with a section (5) of the same characteristics but welded perpendicularly in the middle and so emerging at both the top and the bottom straight section in cross form, creating an air gap.

In the case of the lower starting panel, the lower part of the perpendicular cross-shaped section of the profile would be absent.

The assembly system is relatively simple:

The mooring strap (2) is secured on the fixation wall or support (1) using the fixation elements (3).

The base profile (4) is subsequently fixed to the horizontal section of the mooring strap (3) using the fixation elements (3).

On this base profile (4), the "XPS" panel is attached, previously grooved lengthwise, so that its perpendicular section remains inside the panel core (6).

The assembly and construction system significantly reduces manpower time, allowing for high-performance construction.

## Claims

1. Compound modular panel for the enclosure and external thermal insulation of façades and roofs of a building,
said compound modular panel comprising the following elements from the inside to the outside:
- a layer of fine ceramic insulation consisting of a liquid ceramic compound based on spherical micrograms of four types of special ceramics, in the form of an elastic finish acrylic emulsion;
- a core (6) of said panel of an insulating material wall formed by high-density extruded polystyrene, approximately 100 mm thick;
- an outside wall (9) of said panel made of a natural stone or slate strip joined to the core of the panel by an epoxy-resin-based twin-component viscous adhesive (8) with filler and polyamine content.

2. An installation procedure for a compound modular panel according to claim 1 based on the application of said panel to said building through defined fixation elements using specific profiles, said defined fixation elements comprising:
- a mooring strap consisting of an L-shaped metal section attachable to a mooring support (1) of said building using stud or bolt fixation elements (3);
- a base profile (4) in the form of a straight section longer than the base of said panel which has another profile (5) welded perpendicularly in its middle in cross form and so projecting outward both at the top and bottom, wherein, in the case of a lower starting panel, the lower section of the cross-shaped perpendicular part of said other profile (5) is absent;
the installation procedure comprising the following steps:
- securing said mooring strap (2) on said mooring support (1) using said stud or bolt fixation elements (3); then
- fixing said base profile (4) to the horizontal part of the mooring strap with said stud or bolt fixation elements (3); then
- securing said panel on said base profile, with its perpendicular part inside the core (6) of the panel.

## Patentansprüche

1. Verbundmodulplatte für die Umschließung und Wärmedämmung von Fassaden und Dächern eines Gebäudes nach außen, wobei die Verbundplatte von innen nach außen folgende Elemente aufweist:
.- Eine Schicht aus feinkeramischer Isolierung (7), bestehend aus einer flüssigen Keramikmasse auf der Basis von sphärischen Mikrogramm von vier Arten von Spezialkeramiken, in Form einer elastischen Acrylemulsion.
- Ein Kern der Platte (6) aus einer Isoliermaterialwand, die aus extrudiertem Polystyrol hoher Dichte besteht und ungefähr 100 mm dick ist.
- Eine Außenwand (9) der Platte aus einem Naturstein oder Schieferstreifen, die mit dem Kern der Platte durch einen Zweikomponenten-Viskositätsklebstoff (8) auf Epoxidharzbasis mit Füllstoff- und Polyamingehalt verbunden ist.

2. Installationsverfahren für das zusammengesetzte modulare Paneel nach Anspruch 1 auf der Grundlage der Anbringung des Paneels an dem Gebäude durch definierte Befestigungselemente unter Verwendung spezifischer Profile und **dadurch gekennzeichnet, dass** die Befestigungselemente Folgendes umfassen:
- einen Verankerungsgurt (2), der aus einem L-förmigen Metallabschnitt besteht, der mit Hilfe von Bolzen- oder Bolzenbefestigungselementen (2) am Verankerungshalter (1) befestigt werden kann.
- ein Basisprofil (4) in Form eines geraden Abschnitts, der länger ist als der Plattenboden, das ein anderes Profil (5) aufweist, das in seiner Mitte senkrecht kreuzförmig angeschweißt ist und so sowohl oben als auch unten nach außen vorsteht, wobei in dem Fall bei einer unteren Startplatte fehlt der untere Abschnitt des kreuzförmigen senkrechten Teils des anderen Profils (5);
Der Installationsvorgang umfasst die folgenden Schritte:
Befestigen des Verankerungsriemens (2) an dem Verankerungshalter (1) unter Verwendung der Bolzen oder Bolzenbefestigungselemente (3); dann
Befestigen des Basisprofils (4) an dem horizontalen Teil des Verankerungsriemens mit den Bolzen oder Bolzenbefestigungselementen (3); dann
Befestigen des Basisprofils (4) an dem horizontalen Teil des Verankerungsriemens mit den Bolzen oder Bolzenbefestigungselementen (3); dann
Befestigen der Platte an dem Basisprofil mit seinem senkrechten Teil innerhalb des Kerns (6) der Platte.

## Revendications

1. Panneau modulaire composite pour l'enveloppe et l'isolation thermique externe de façades et de toits de bâtiments, ledit panneau composite comprenant les éléments suivants de l'intérieur vers l'extérieur:
.- Couche d'isolant céramique fine (7) constituée d'un composé céramique liquide à base de microgrammes sphériques de quatre types de céramique spéciale, sous la forme d'une émulsion acrylique de finition élastique.
.- Une âme dudit panneau (6) d'une paroi en matériau isolant formée de polystyrène extrudé à haute densité, d'environ 100 mm d'épaisseur.
.- Une paroi extérieure (9) dudit panneau constituée d'une bande de pierre naturelle ou d'ardoise, reliée à l'âme du panneau par un adhésif visqueux à base de résine époxy à deux composants (8), chargé en polyamine.

2. Procédure d'installation du panneau modulaire composite selon la revendication 1, basée sur l'application dudit panneau au bâtiment par l'intermédiaire d'éléments de fixation définis utilisant des profils spécifiques et **caractérisée en ce que** les éléments de fixation comprennent les éléments suivants:
.- une sangle d'amarrage (2) constituée d'une section métallique en forme de L pouvant être fixée au support d'amarrage (1) à l'aide d'éléments de fixation à goujon ou à boulon (2).
.- un profilé de base (4) en forme de section droite plus long que la base du panneau qui présente un autre profilé (5) soudé perpendiculairement en son centre en croix et faisant ainsi saillie vers le haut et le bas, dans lequel, dans le cas d'un panneau de départ inférieur, la partie inférieure de la partie perpendiculaire en forme de croix dudit autre profilé (5) est absente;
la procédure d'installation comprenant les étapes suivantes:
fixer ladite sangle d'amarrage (2) sur ledit support d'amarrage (1) à l'aide desdits éléments de fixation de goujon ou de boulon (3); ensuite
fixer ledit profilé de base (4) à la partie horizontale de la sangle d'amarrage avec lesdits éléments de fixation de goujon ou de boulon (3); ensuite
fixer ledit profilé de base (4) à la partie horizontale de la sangle d'amarrage avec lesdits éléments de fixation de goujon ou de boulon (3); ensuite
fixer ledit panneau sur ledit profilé de base, avec sa partie perpendiculaire à l'intérieur du noyau (6) du panneau.
